# EUROPÄISCHE PATENTSCHRIFT

(11) **EP 2 042 748 B1**
(45) Veröffentlichungstag und Bekanntmachung des Hinweises auf die Patenterteilung: **26.12.2012**
(21) Anmeldenummer: 09000196.7
(22) Anmeldetag: 04.06.2004
(51) Int. Cl.: F16B 5/00

(54) **Gratleiste für Massivholz**
Stiffening ridge for solid wood
Nervure raidisseuse pour bois massif

(43) Veröffentlichungstag der Anmeldung: 01.04.2009
(62) Teilanmeldung aus: 04405347.8
(73) Patentinhaber: Meyer AG, 6373 Ennetbürgen (CH)
(72) Erfinder: Meyer, Rudolf, 6373 Ennetbürgen (CH)
(74) Vertreter: Nückel, Thomas

(56) Entgegenhaltungen:
- US-A- 4 057 294
- US-A- 5 236 153

## Beschreibung

### Technisches Gebiet

Die Erfindung betrifft eine Gratleiste für Massivholz. Die erfindungsgemässe Gratleiste ist vorzugsweise im Möbelbau einsetzbar.

Massive Holzplatten und Massivholz im Allgemeinen neigen dazu, sich zu werfen. Um dies zu vermeiden, wird im Möbelbau bei Massivholz eine sogenannte Gratleiste in eine Gratnut, die quer zur Faserrichtung des Massivholzes verläuft, eingesetzt. In der Regel wird dazu ins Massivholz eine schwalbenschwanzförmige Nut eingefräst und anschließend die Gratleiste, welche im Querschnitt ebenfalls schwalbenschwanzförmig geformt ist, in die Gratnut eingeschoben, so dass eine formschlüssige Schwalbenschwanzverbindung entsteht. Über den Formschluss wird erreicht, dass die Massivholzplatte sich nicht mehr verwirft, aber dennoch in Längsrichtung der Gratleiste arbeiten kann.

### Stand der Technik

Aus der Druckschrift US 5,236,153 ist ein schnell lösbarer Befestigungsbeschlag bekannt. Der Beschlag umfasst eine untere hufeisenförmige Führung und zwei U-förmige Halteelemente, wobei jeweils der untere Schenkel der Halteelemente in die untere Führung ragt. Zwischen den beiden Halteelementen sind ein runder Stift und eine Kugel angeordnet, die den Drehpunkt für die boiden Halteelemente bilden. Die beiden oberen Schenkel der Halteelemente ragen in eine obere, ebenfalls hufeisenförmige Führung. Bei diesem Beschlag handelt es sich allerdings nicht um eine Gratleiste, sondern um ein Befestigungssystem, um in einem Flugzeug beispielsweise Sitze, Waschbecken, ToileL-Len, Trennwände oder Bordküchen zu befestigen.

Aus dem Stand der Technik DE 42 38 680 A1 ist eine einlegbare und demontierbare Schwalbenschwanz-Gratleistenverbindung für den Gestell- und Möbelbau bekannt. Die in dieser Druckschrift gezeigte Gratleiste besteht aus zwei Keilleisten, die in die schwalbenschwanzförmige Gratnut eingelegt sind. Die beiden Keilleisten sind über eine Doppelschraube gegenüber den Flanken der schwalbenschwanzförmigen Gratnut verspannbar. Die Doppelschraube weist dazu ein links drehendes und ein rechts drehendes Gewinde auf, wobei das Linksgewinde der Doppelschraube in einem in der einen Keilleiste vorgesehenen Linksgewinde und das Rechtsgewinde der Doppelschraube in einem in der zweiten Keilleiste vorgesehenen Rechtsgewinde geführt ist. Durch ein Drehen der Doppelschraube lässt sich nun erreichen, dass die beiden Keilleisten entweder aufeinander zu oder auseinander bewegt werden. Beim Auseinanderbewegen verspannt sich dann die Gratleiste gegenüber der Gratnut. Diese Ausführungsform hat jedoch eine Reihe von Nachteilen. Zum einen sind besonders ausgebildete Doppelschrauben erforderlich, um die beiden Keilleisten auseinander zu drücken. Die beiden Keilleisten müssen zudem in einem fest vorgegebenen Abstand Gewindebohrungen zur Aufnahme der Doppelschrauben aufweisen. Des Weiteren ist bei dieser Ausführungsform von Nachteil, dass für das Werkzeug zum Drehen der Doppelschraube relativ wenig Platz zur Verfügung steht und deshalb das Drehen der Doppelschraube zeitaufwendig ist. Sollte sich nach dem Einsetzen der Gratleiste in die Gratnut herausstellen, dass eine weitere Doppelschraube zum Verspannen erforderlich ist, so muss die gesamte Gratleiste erst wieder entspannt, dann aus der Gratnut herausgenommen, eine weitere Doppelschraube eingesetzt und schließlich die Gratleiste wieder in die Gratnut eingebaut und verspannt werden. Die Montage der Gratleiste ist daher zeitaufwendig.

Aus der Druckschrift DE 102 01 565 A1 ist eine Baueinheit mit einer Holzplatte und einer Gratleiste bekannt, wobei die Gratleiste in eine Nut der Holzplatte eingesetzt ist.

Die Gratleiste umfasst ein erstes und ein zweites Halteteil sowie ein dazwischen angeordnetes Druckteil. Die beiden Halteteile sind jeweils mit einem Profilabschnitt versehen, die unter der Kraft des Druckteils an den Seitenwänden der Nut anliegen, wobei die Seitenwände der Nut die beiden Profilabschnitte wenigstens teilweise übergreifen.

### Darstellung der Erfindung

Eine Aufgabe der Erfindung ist es, eine Gratleiste für Massivholz anzugeben, bei der es genügt, wenn die Gratnut im Massivholz lediglich über einen Teil der Breite des Massivholzes verläuft.

Dadurch, dass sich die Gratnut nicht bis zu den Aussenkanten des Massivholzes erstreckt, bleiben die Kanten des Massivholzes unversehrt. Für den Betrachter ist daher die im Massivholz verlaufende Nut in der Regel nicht zu sehen. Der Betrachter kann die Nut nurmehr dann wahrnehmen, wenn er auf die Seite des Massivholzes blickt auf der die Nut verläuft.

Zudem bietet die erfindungsgemäße Gratleiste den Vorteil, dass sie einfach und schnell montiert werden kann, ohne dass es dazu eines speziellen Werkzeugs bedarf.

Die Aufgabe wird durch eine Gratleiste für Massivholz mit den Merkmalen gemäß Patentanspruch 1 gelöst.

Die Gratleiste für Massivholz umfasst eine erste und eine zweite Profilleiste, wobei jeweils eine Seite der Profilleisten derart gekrümmt ist, dass sich die beiden Profilleisten durch ein Eindrehen in die Gratnut, welche im Massivholz eingelassen ist, mit der Gratnut verspannen.

Vorteilhafte Weiterbildungen der Erfindung ergeben sich aus den in den abhängigen Patentansprüchen angegebenen Merkmalen.

Bei einer ersten Ausführungsform der Erfindung sind die beiden Profilleisten der Gratleiste derart geformt, dass sie mit der Gratnut quer zur Längsrichtung der Gratnut einen Formschluss bilden können.

Der Formschluss kann insbesondere mit Profilleisten erreicht werden, die im Querschnitt konisch geformt sind.

Bei einer weiteren Ausführungsform der Erfindung weisen die Profilleisten zusammen einen schwalbenschwanzförmigen Querschnitt auf. Damit lässt sich auf einfache Art und Weise zwischen der Gratnut und der Gratleiste ein Formschluss erreichen.

Zudem ist es von Vorteil, wenn bei der erfindungsgemäßen Gratleiste die beiden Profilleisten aus Aluminium gefertigt sind. Aluminium hat ein geringes Gewicht, hat eine hohe Biegesteifigkeit und ist einfach weiterverarbeitbar.

Darüber hinaus können die beiden Profilleisten eine Eloxalschicht aufweisen.

Die beiden Profilleisten können nach einem weiteren Merkmal der Erfindung einen Hohlraum aufweisen. Dadurch werden die beiden Profilleisten leichter und kostengünstiger.

In einer weiteren Ausführungsform kann im Hohlraum der Profilleiste ein Versteifungselement vorgesehen sein. Dies ist insbesondere dann von Vorteil, wenn die Steifigkeit der Profilleiste allein nicht ausreicht.

Darüber hinaus können die Profilleisten eine Nut aufweisen, in die ein Profilelement einschiebbar ist. Mit Hilfe der Nuten kann das Profilelement auf einfache Art und Weise passgenau montiert werden. Das Profilelement kann zusätzlich als zusätzliches Versteifungselement dienen.

### Kurze Beschreibung der Zeichnungen

Im Folgenden wird die Erfindung mit mehreren Ausführungsbeispielen anhand von 18 Figuren weiter erläutert.
- Figur 1: zeigt, wie die Gratleiste in die Gratnut, die im Massivholz eingelassen ist, eingesetzt wird.
- Figur 2: zeigt die montierte Gratleiste und die Massivholzplatte in einer ersten Montagevariante im Querschnitt.

### Wege zur Ausführung der Erfindung

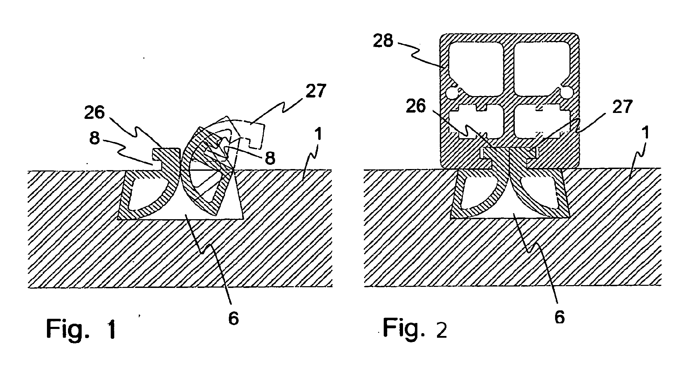

In Figur 1 ist ein Ausschnitt einer Massivholzplatte 1 im Querschnitt dargestellt, wobei die Massivholzplatte 1 eine schwalbenschwanzförmige Gratnut 6 aufweist. In die Gratnut 6 ist eine erste Profilleiste 26 eingelegt. Eine zweite Profilleiste 27 lässt sich über die Öffnung der schwalbenschwanzförmigen Gratnut 6 in die Gratnut 6 einsetzen. Die Profilleiste 27 ist wird so eingesetzt, dass die schräge Außenseite der Profilleiste 27 an der Flanke der Gratnut 6 und die Grundseite der Profilleiste 27 auf dem Gratnutgrund zu liegen kommt. Dies gilt sinngemäß auch für die Profilleiste 26. Nachdem die beiden Profilleisten 26 und 27 in die Gratnut 6 eingelegt sind, können die beiden Profilleisten 26 und 27 gegenüber der Gratnut 6 verspannt werden.

Die beiden Profilleisten 26 und 27 weisen, wie in den Figuren 1 und 2 zu sehen ist, in ihrem Inneren einen Hohlraum 5 auf. Auf den Zweck und die sich daraus ergebenden Vorteile wird im Folgenden weiter eingegangen.

Eine Eloxalschicht auf den Profilleisten 26 und 27 verbessert die Gleitfähigkeit zwischen Holz und Profilleiste 26, 27. Die Eloxalschicht ist eine durch anodische Oxidation aufgebrachte Schicht. Zudem verhindert sie, dass sich das Holz durch Reibung mit den Aluminiumprofilleisten 26 und 27 verfärbt.

In Figur 1 ist eine Ausführungsform der erfindungsgemässen Gratleiste gezeigt. Diese weist eine erste Profilleiste 26 und eine zweite Profilleiste 27 auf, die, wie in Figur gezeigt ist, in die Gratnut 6 eingedreht werden. Die beiden Profilleisten 26 und 27 weisen dazu jeweils eine gekrümmte Fläche auf, deren Radius so berechnet ist, dass sie durch Drehen um ihre Längsachse mit definiertem begrenzten Kraftaufwand in die Gratnut 6 eingedreht werden können. Die Verspannung der beiden Gratleisten 26 und 27 gegenüber der Gratnut 6 erfolgt dadurch, dass die Summe der beiden Radien der Gratleisten 26 und 27 etwas größer ist als die Öffnung der Gratnut 6. Die Krümmungen der beiden Profilleisten 26 und 27 können so gewählt sein, dass sich die in der Gratnut 6 verspannten Profilleisten 26 und 27 nicht mehr ohne weiteres selbst aus der Gratnut 6 ausdrehen können. Die beiden Profilleisten 26 und 27 werden dazu über den Punkt der grössten Verspannung hinaus in die Gratnut 6 hineingedreht. Zusätzlich können die beiden Profilleisten 26 und 27 durch ein in Figur 14 gezeigtes Vierkantprofil 28, welches in die Nuten 8 der beiden Profilleisten 26 und 27 geschoben wird, zusätzlich gegen ein unerwünschtes Ausdrehen gesichert werden. Selbstverständlich können am Vierkantprofil 28, welches beispielsweise aus stranggepresstem Aluminium hergestellt wurde, zusätzliche Profilelemente befestigt werden.

Es ist nicht zwingend erforderlich, dass die Gratnut 6 einen schwalbenschwanzförmigen Querschnitt aufweist. Es sind auch andere Gratnut-Querschnitte denkbar, wobei dann die Form der Profilleisten 26, 27 an den geänderten Querschnitt der Gratnut angepasst werden muss, um eine formschlüssige Verbindung zwischen Gratnut und Profilleisten zu gewährleisten.

Vorteilhafterweise sind die beiden Profilleisten 26 und 27 symmetrisch ausgebildet. Dadurch wird es möglich, mit einer als Meterware hergestellten Profilleiste, die bedarfsweise auf die gewünschte Länge abgelängt wird, die erfindungsgemäße Gratleiste zu bilden. Ein weiterer Vorteil der beschriebenen Profilleisten besteht darin, dass die Profilleisten ohne weiteres aneinandergesetzt werden können und damit beliebig verlängerbar sind.

In einer Ausführungsform der Gratleiste ist die Breite der Gratnut 6 ca. 2/10 mm kleiner bemessen als dies für eine spannungsfreie Montage der beiden Profilleisten nötig wäre. Die 2/10 mm Untermass genügen, um mit Hilfe der Schraube 7 eine ausreichende Verspannung zwischen Gratnut 6 und Profilleisten 2 und 3 zu erreichen.

Wird die Gratnut 6 so tief ausgeführt, dass die beiden Profilleisten 26 und 27 mit der Massivholzplatte 1 bündig abschließen, so hat dies insbesondere bei Tischen mit Auszugsplatten Vorteile, da es bei dieser Montagevariante keine hervorstehenden Bauteile gibt.

### Bezugszeichenliste

- 1: Massivholz
- 6: Gratnut
- 8: Nut in der Profilleiste
- 26: erste Profilleiste
- 27: zweite Profilleiste
- 28: Vierkantprofil

## Patentansprüche

1. Gratleiste für Massivholz,
- mit einer ersten und einer zweiten Profilleiste (26, 27),
- wobei jeweils eine Seite der Profilleisten (26, 27) derart gekrümmt ist, dass sich die beiden Profilleisten (26, 27) durch ein Eindrehen in eine Gratnut (6), welche im Massivholz (1) eingelassenen ist, mit der Gratnut (6) verspannen, und
- wobei die Summe der beiden Radien der Gratleisten (26, 27) etwas grösser als die Öffnung der Gratnut (6) ist.

2. Gratleiste nach Patentanspruch 1,
bei der die beiden Profilleisten (26, 27) derart ausgebildet sind, dass sie mit der Gratnut (6) quer zur Längsrichtung der Gratnut (6) einen Formschluss bilden können.

3. Gratleiste nach Patentanspruch 1 oder 2,
bei der die Profilleisten (26, 27) eine Nut (8) aufweisen, in die ein Profilelement (28) einschiebbar ist.

4. Gratleiste nach Patentanspruch 1, 2 oder 3,
bei der die beiden Profilleisten (26, 27) zusammen einen schwalbenschwanzförmigen Querschnitt aufweisen.

5. Gratleiste nach einem der Patentansprüche 1 bis 4,
bei der die Profilleisten (2, 3) aus Aluminium gefertigt sind.

6. Gratleiste nach Patentanspruch 5,
bei der die Profilleisten (2, 3) eine Eloxalschicht aufweisen.

7. Gratleiste nach einem der Patentansprüche 1 bis 7,
bei der die Profilleisten (2, 3) einen Hohlraum (5) aufweisen.

## Claims

1. An edge strip for solid wood,
- comprising a first and a second profile strip (26, 27),
- wherein one side of each of the profile strips (26, 27) is curved such that the two profile strips (26, 27) become braced with an edge groove (6) by being rotated into the edge groove (6), which is formed in the solid wood (1), and
- wherein the sum of the two radii of the edge strips (26, 27) is slightly larger than the opening of the edge groove (6).

2. The edge strip according to claim 1,
wherein the two profile strips (26, 27) are designed such that that can establish a form-fit connection with the edge groove (6) transversely to the lonqitudinal direction of the edge groove (6).

3. The edge strip according to claim 1 or 2,
wherein the profile strips (26, 27) comprise a groove (8) into which a profile element (28) can be inserted.

4. The edge strip according to claim 1, 2 or 3,
wherein the two profile strips (26, 27) together have a dovetail-shaped cross section.

5. The edge strip according to one of claims 1 to 4,
wherein the profile strips (2, 3) are made of aluminium.

6. The edge strip according to claim 5,
wherein the profile strips (2, 3) have an anodized coating.

7. The edge strip according to one of claims 1 to 7,
wherein the profile strips (2, 3) comprise a hollow space (5).

## Revendications

1. Bande de bordure pour bois massif,
- comprenant une première et une seconde bande profilée (26, 27),
- un côté de chacune des bandes profilées (26, 27) étant cintré de telle sorte que les deux bandes profilées (26, 27) se serrent avec une rainure de bordure (6) en pénétrant en tournant dans la rainure de bordure (6), laquelle est formée dans le bois massif (1), et
- la somme des deux rayons des bandes de bordure (26, 27) est légèrement plus grande que l'ouverture de la rainure de bordure (6).

2. Bande de bordure selon la revendication 1,
dans laquelle les deux bandes profilées (26, 27) sont agencées de telle sorte qu'elles peuvent établir une liaison mécanique avec la rainure de bordure (6) transversalement à la direction longitudinale de la rainure de bordure (6).

3. Bande de bordure selon l'une des revendications 1 ou 2,
dans laquelle les bandes profilées (26, 27) comprennent une rainure (8) dans laquelle un élément profilé (28) peut être introduit.

4. Bande de bordure selon l'une des revendications 1, 2 ou 3,
dans laquelle les deux bandes profilées (26, 27) ont ensemble une section transversale en queue d'aronde.

5. Bande de bordure selon l'une des revendications 1 à 4,
dans laquelle les bandes profilées (2, 3) sont faites d'aluminium.

6. Bande de bordure selon la revendication 5,
dans laquelle les bandes profilées (2, 3) ont un revêtement anodisé.

7. Bande de bordure selon l'une des revendications 1 à 7,
dans laquelle les bandes profilées (2, 3) comprennent un espace creux (5).
